# EUROPEAN PATENT APPLICATION

(11) **EP 1 350 705 A2**
(43) Date of publication of application: **08.10.2003**
(21) Application number: 03007688.9
(22) Date of filing: 03.04.2003
(51) Int. Cl.: B62B 3/06

(54) **Load Transfer Device**

(30) Priority: 04.04.2002 GB 0207776
(71) Applicant: Mastermover International Limited, Ashbourne, Derbyshire DE6 1AS (GB)
(72) Inventor: Jones, Andrew David Mastermover Int. Ltd., Ashbourne, Derbyshire DE6 1AS (GB); Greveson, Simon Andrew Mastermover Int. Ltd., Ashbourne, Derbyshire DE6 1AS (GB)
(74) Representative: Wardley, Diana Mary

(57) **Abstract**

A load transfer device (26) for use with a load transport assembly (10) includes coupling means comprising a receiving member (40) for receiving a projecting part (112) of an article (100) to be transported and load transmission means for transmitting the load from the article to the load transport assembly.

A load transport assembly (10) comprises a load transfer device (26), a body (12) upon which the load transfer device (26) is mounted, roller means (24,28) rotatably mounted on the body (12) for supporting the load transfer device (26), and drive means for driving the roller means (24).

## Description

### Description of Invention

This invention relates to load transfer devices. This invention also relates to load transport assemblies.

In the haulage industry, it is often desirable to move lorry trailers around a goods yard. At present, such trailers can only be moved by the use of large or heavy vehicles, or the lorry cab itself.

According to one aspect of this invention, there is provided a load transfer device for use with a load transport assembly, the load transfer device comprising coupling means comprising a cup for receiving a projecting part of an article to be transported and load transmission means for transmitting the load from the article to the load transport assembly.

The device may further include stabilising means which is preferably engageable with said article to stabilise the load transport assembly.

According to another aspect of this invention, there is provided a load transfer device for use with a load transport assembly, the load transfer device comprising coupling means for coupling the load transfer device to an article to be transported, stabilising means engageable with said article to stabilise the load transport assembly, and load transmission means for transmitting the load from the article to the load transport assembly.

Preferably, coupling means comprises a receiving member for receiving a projecting part of said article, which projecting part may be a downwardly projecting part, for example a hitch member of a lorry trailer Advantageously, the receiving member comprises a cup, which may have an open top to receiving said projecting part of the article.

The stabilising means preferably comprises an outwardly extending member provided on the coupling means.

The outwardly extending member desirably comprises a platform which may extend around the coupling means. The stabilising means preferably defines an aperture to receive therethrough at least a portion of the coupling means. Conveniently, the stabilising means extends radially outwardly from the coupling member and may be generally circular in configuration.

The load transmission means may comprise lifting means to lift the coupling means into coupling engagement with said projecting part of the article. The load transmission means may further comprise a support to support the lifting means. The support member may be securable to the load transport assembly.

The lifting means may comprise power lifting means, which may comprise a ram assembly, suitably an hydraulic ram assembly.

Preferably, the coupling means is provided at the upper end region of the lifting means, whereby the lifting means can effect substantially vertical movement of the coupling means. Preferably, the lifting means extends substantially vertically upwardly.

According to another aspect of this invention, there is provided a load transport assembly comprising a load transfer device as described above, a body upon which the load transfer device is mounted, roller means rotatably mounted on the body for supporting the load transfer device, and drive means for driving the roller means.

The roller means may include a main roller member for supporting the load transfer assembly. The load transfer assembly is preferably arranged at an end region of the body. The main roller member may be rotatably mounted at said end region of the body. Preferably, the main roller member has an axle which is mounted substantially directly under the load transfer device.

The roller means may further include a stabilising roller member which may be mounted at the opposite end region of the body. The stabilising roller member may be a jockey wheel. The load transport assembly may comprise a plurality, for example two, stabilising roller members. A respective one of the stabilising roller members may be provided at each side of the body.

The load transport assembly preferably includes manipulation means mounted on the body, the manipulation means comprising a first part fixedly mounted on the body and a second part movably mounted on the first part. Preferably, the first part is mounted on the body by temporary connection means, for example nuts and bolts. Alternatively, the first part may be mounted on the body by permanent connection means, for example by welding.

The second part is preferably movably mounted on the first part at the opposite end region thereof to the body. The second part conveniently extends outwardly from the first part. The second part may be moveable relative to the first part in a generally vertical plane. The second part may be pivotally mounted on the first part.

The second part preferably includes a handle at the free end region thereof. The handle may include control means for controlling operation of the load transport assembly.

The control means is preferably connected to the drive means to control the drive means.

An embodiment of the invention will now be described by way of example only, with reference to the accompanying drawings, in which;
Fig. 1 is a perspective view of a load transport assembly;
Fig. 2 is a side view of the load transport assembly shown in Fig. 1;
Fig. 3 is a top plan view of the load transport assembly shown in Fig. 1;
Fig. 4 is a perspective view of a load transfer device;
Fig. 5 is an exploded view of the load transfer device shown in Fig. 5;
Fig. 6 is a side view of the load transfer device shown in Fig. 4;
Fig. 7 is a perspective view of manipulation means for use with the load transport assembly shown in Fig. 1;
Fig. 8 is a part-sectional side view of the manipulation device shown in Fig. 7.
Fig. 9 is a schematic side view of the load transport assembly shown in Fig.1 in use.

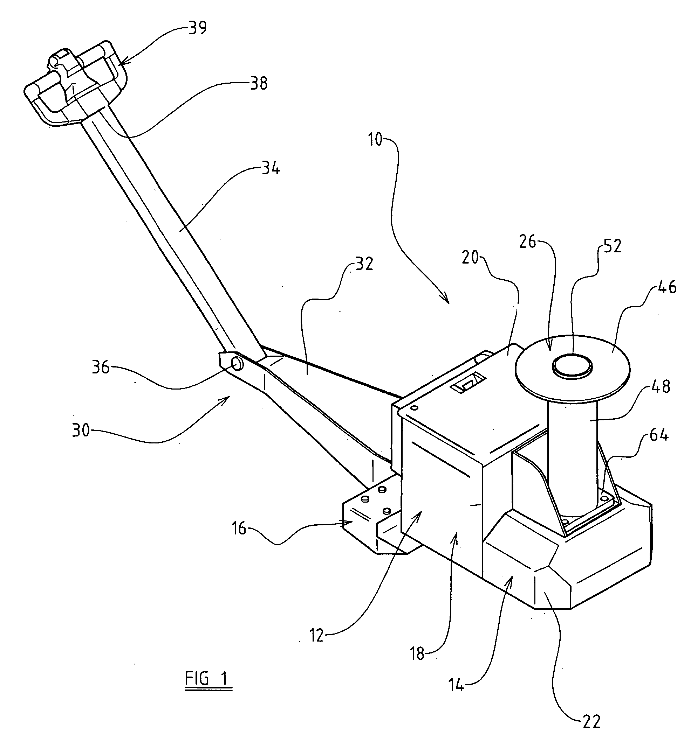

Referring to Figs. 1 to 3, there is shown a load transport assembly 10 (herein after referred to as a tractor) comprising a body 12 having a front end region 14, a rear region 16, and a central region 18. The central region 18 includes a central casing 20. The tractor 10 is driven by a motor, for example an electric motor. The battery for the motor is housed within the central casing 20.

The front region 14 comprises a front housing 22 for rotatably housing a main support wheel 24, and the motor, which is drivingly connected to the main support wheel 24.

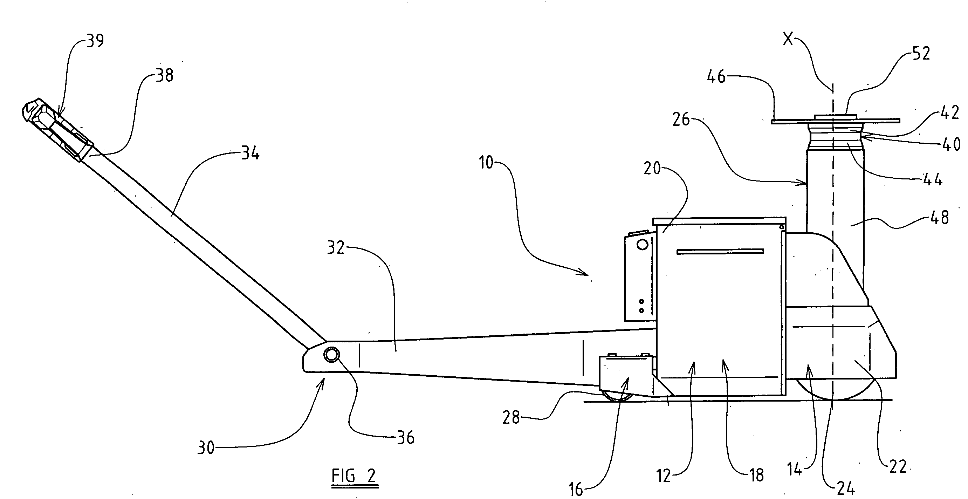

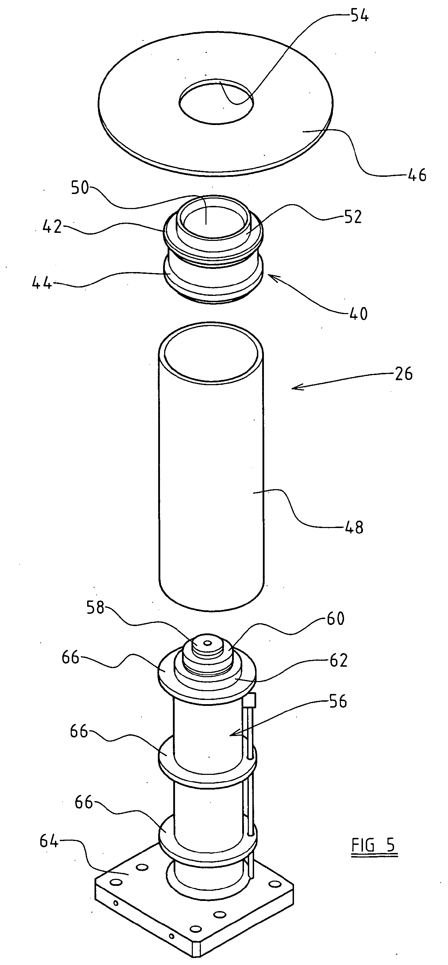

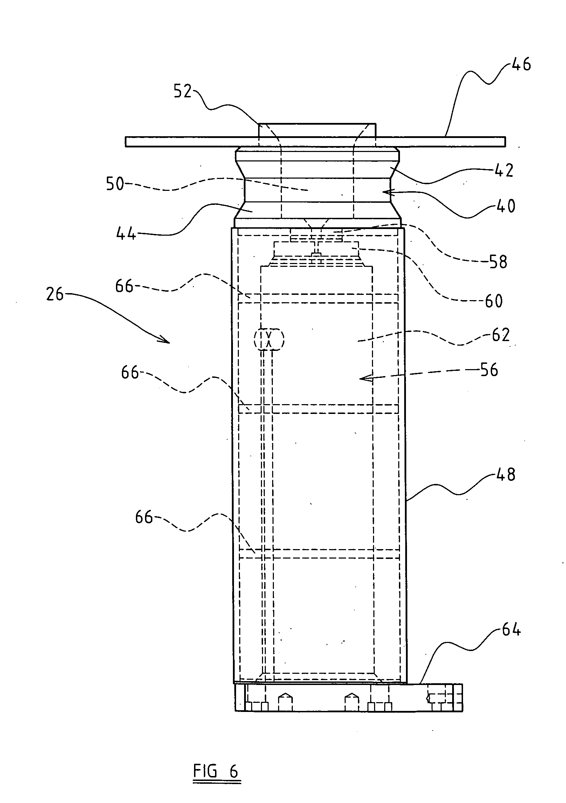

Also provided at the front end region 14 is a load transfer device 26 having a principle axis X (see Fig. 2) which extends through the axle of the main support wheel 24. The load transfer device 26 is described in more detail below with reference to Figs. 5 and 6.

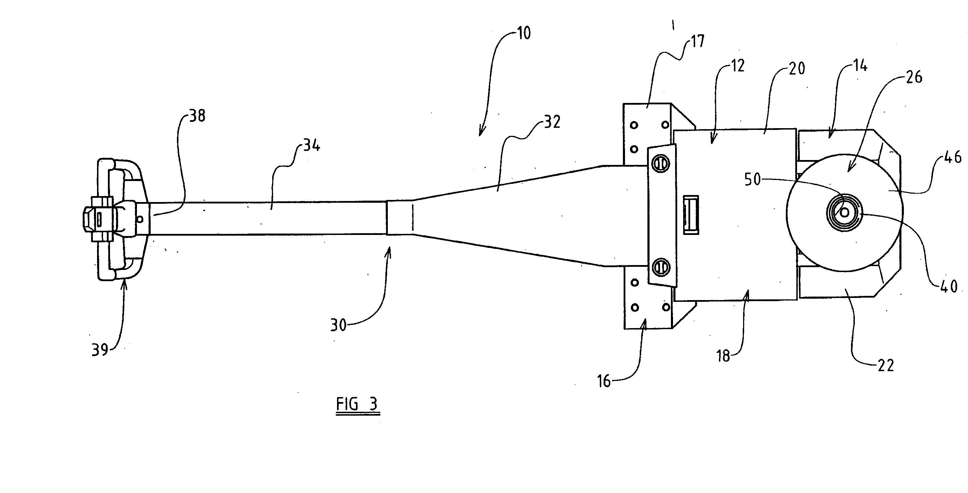

The rear region 16 comprises a rear casing 17 extending across the width of the central casing 20 and extends outwardly therefrom on opposite sides (see Fig. 3) to house a pair of stabilising wheels 28. One of the stabilising wheels 28 is provided at each side of the rear casing 17.

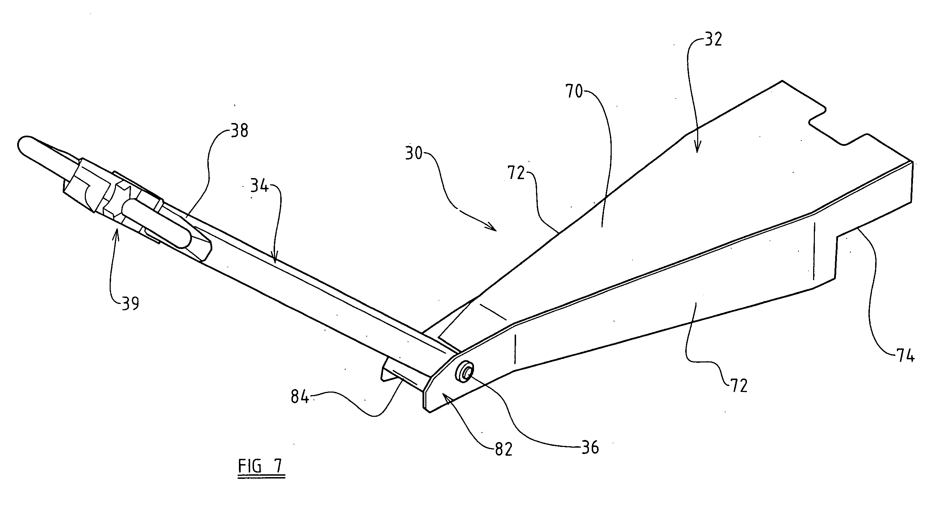

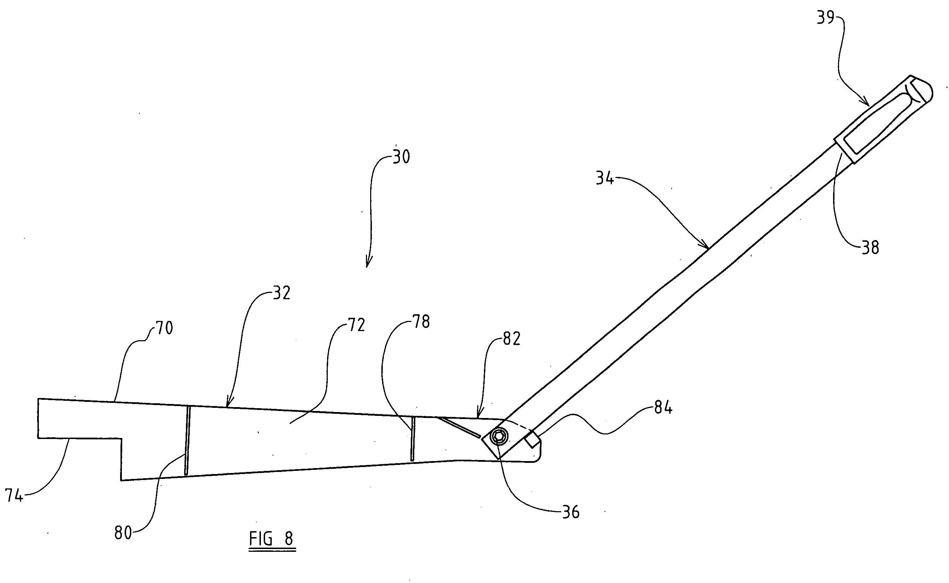

Also provided at the rear region 16 of the main body 12 is manipulation means 30 which comprises an elongate generally triangular first part 32, at the apex of which is pivotally attached an elongate second part 34 at a pivot 36 in the form of a pivot pin. The second part 34 carries at its free end 38 control means 39 in the form of handles and the like for controlling the electric motor housed in the casing 20. The manipulation means 30 is described in more detail below with reference to Figs. 7 and 8.

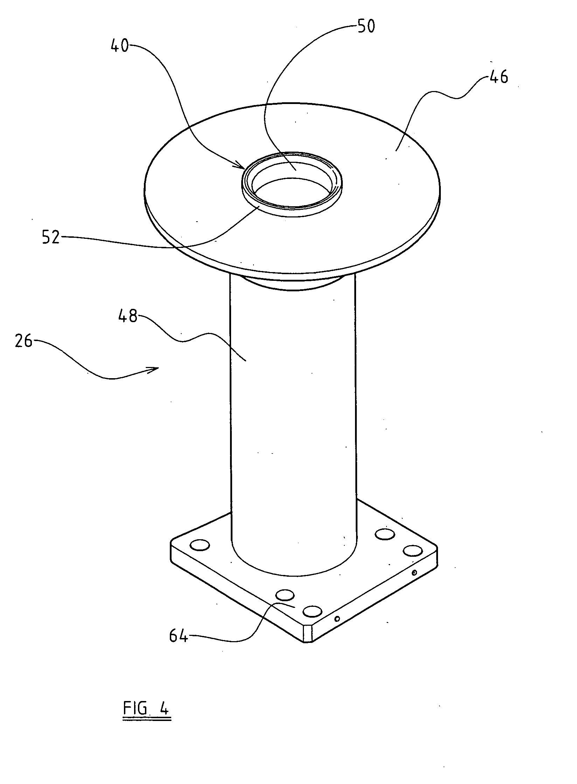

Referring to Figs. 4, 5 and 6, there is shown the load transfer device 26, which comprises receiving means in the form of a cup 40 for receiving a hitch member of a vehicle trailer to be transported by the tractor 10, as is described below with reference to Fig. 5 The cup 40 comprises upper and lower flange members 42, 44. The upper flange member 42 is provided to engage and support stabilising means in the form of a stabilising disk 46. The lower flange 44 is provided to engage an outer support tube 48. The cup 40 includes a recess 50 to receive the hitch member of a lorry trailer. The cup 40 also includes an upwardly extending annular part 52 which provides the upper rim region of the recess 50.

The stabilising disk 46 defines a circular aperture 54 in the centre thereof. The aperture 54 is of a suitable size to enable the disk 46 to fit over the upwardly extending annular part 52 so that the disk sits on the upper flange 42 of the cup 40. The cup 40 is thus arranged between the support tube 48 and the disk 46 such that the flange 44 engages the top of the tube 48, and the flange 42 engages the stabilising disk 46.

The load transfer device 26 also includes lifting means in the form of an hydraulic ram 56 which comprises three sections 58, 60, 62 which are telescopically received in each other. The ram 56 is mounted on a support plate 64 which, in turn, is fixedly secured to the front region 14 of the tractor 10 (see Fig.1).

The ram 56 is provided with three rings 66 spaced along the length of the third section 62 thereof. The rings 66 engage the inner surface of the tube 48 so that the tube 48 can support the ram 56.

The support plate 64 is provided with a plurality of bolt apertures 68 to receive therethrough bolts for securing the load transmission means 26 to the body 12 of the tractor 10.

Referring to Figs. 7 and 8, there is shown the manipulation means 30 for manipulating the tractor 10. The manipulation means 30 is mounted on the rear casing 17 of the body 12 by, for example, welding.

The first part comprises an upper frame member 70 and a pair of downwardly depending skirt members 72 on opposite sides of the frame member 70 in each of which a recess portion 74 is defined at the front end thereof to fit around the rear casing 17. A pair of bracing members 78, 80 extend downwardly from the upper frame member 70 across the width thereof.

The first part 32 comprises an apex region 82 at which the second elongate part 34 is pivotally attached at the pivot 36. The second elongate part 34 is of a box section, and a stop member 84 is provided at the apex end region 82 of the first part 32 to hold the second part 34 in an upwardly extending position, as shown in Figs. 7 and 8 whereby it can be operated by a user.

The manipulation means 30 is secured to the main body 12 by arranging the manipulation means 30 so that the two recessed portions 74 are fitted around the rear casing 16 and then welding the first part 32 to the rear casing 17.

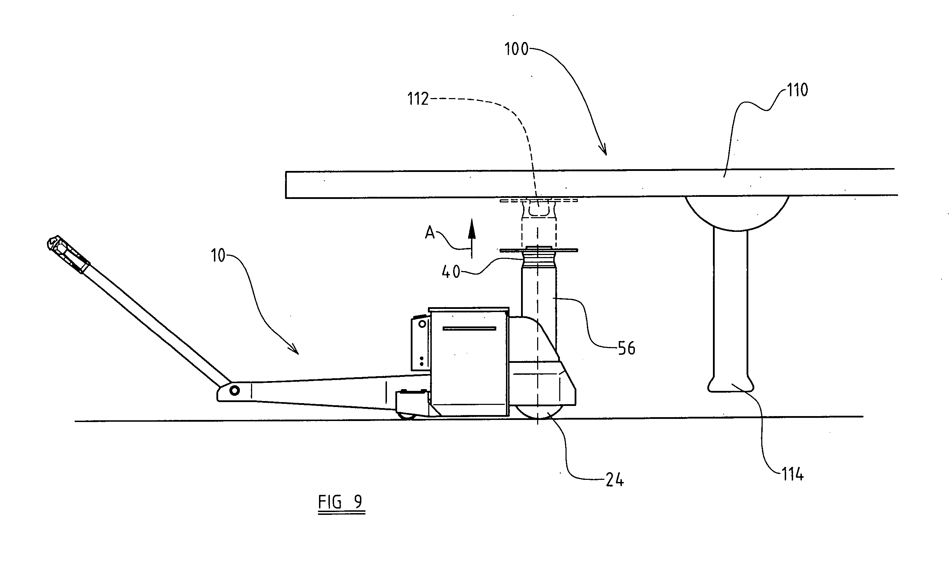

Referring to Fig. 9, there is shown a schematic representation of the tractor 10 in use in towing a lorry trailer 100, only the front end region of which is shown. The lorry trailer 100 comprises a main chassis 110, having at the front end thereof a downwardly depending projecting part in the form of a hitch member 112. The lorry trailer 100 is supported at its front end region by a pair of retractable legs 114, only one of which is shown.

In operation, the tractor 10 is moved into position by operating the appropriate controls on the control means 39 until the cup 40 is directly beneath the hitch 112. The user then causes the hydraulic ram 56 to lift the cup 40 as shown by the arrow A until the hitch member 112 is received therein. Continued operation of the hydraulic ram 56 causes the cup 40 and the disk 46 to press against the underside of the lorry trailer 100, to lift the legs 114 off the ground. The weight of the front of the trailer 100 is thus transferred onto the main wheel 24 of the tractor 10. The user then operates the appropriate controls on the control means 39 to move the tractor 10 and tow or push the lorry trailer 100 to a desired position.

There is thus described a load transfer device, and a load transport assembly which enables lorry trailers to be moved simply and easily in the confined spaces of goods yards, distribution centres, trailer manufacturers and the like, without the need to result to large or heavy vehicles.

Various modifications can be made without departing from the scope of the invention. For example, the disk 46 could be replaced by a stabilising member of a square, or other suitable configuration. Also, the motor and battery could be housed in the central casing 20, or in any other suitable place. In addition, the ram 56 may be provided with any suitable number of rings 66, other than 3, for example 2, 4 or 5.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A load transfer device (26) for use with a load transport assembly (10), **characterised in that** the load transfer device includes coupling means comprising a receiving member (40) for receiving a projecting part (112) of an article (100) to be transported and load transmission means for transmitting the load from the article (100) to the load transport assembly (10).

2. A load transfer device (26) according to claim 1 **characterised in that** the receiving member comprises a cup (40), having an open top adapted to receive said projecting part (112) of the article (100).

3. A load transfer device (26) according to claim 1 or 2 **characterised in that** it further includes a stabilising means (46) which comprises an outwardly extending member provided on the coupling means (40).

4. A load transfer device (26) according to claim 3 **characterised in that** the outwardly extending member comprises a platform (46) which extends around the coupling means (40) and which defines an aperture (54) to receive therethrough at least a portion (52) of the coupling means.

5. A load transfer device (26) according to any one of claims 3 to 4 **characterised in that** the load transmission means comprises lifting means (56) to lift the coupling means (40) into coupling engagement with said projecting part (112) of the article (100).

6. A load transport assembly (10) **characterised in that** it comprises a load transfer device (26) according to any one of claims 1 to 5, a body (12) upon which the load transfer device (26) is mounted, roller means (24, 28) rotatably mounted on the body (12) for supporting the load transfer device (26), and drive means for driving the roller means (24).

7. A load transfer assembly according to claim 6 **characterised in that** the roller means (24, 28) includes a main roller member (24) for supporting the load transfer device (26), both the load transfer device (26) and the main roller member (24) being arranged at an end region (14) of the body (12), and the main roller member (24) having an axle which is mounted substantially directly under the load transfer device (26).

8. A load transfer assembly (10) according to claim 6 or 7 **characterised in that** the roller means (24, 28) further includes stabilising roller members (28) mounted at the opposite end region (16) of the body (12), a respective one of the stabilising roller members (28) being provided at each side of the body (12).

9. A load transfer assembly (10) according to any one of claims 6 to 8 **characterised in that** it further includes manipulation means (30) mounted on the body (12) at the opposite end region (16) thereof, the manipulation means (30) comprising a first part (32) fixedly mounted on the body (12) and a second part (34) movably mounted on the first part (32).

10. A load transfer assembly (10) according to claim 9 **characterised in that** the second part (34) extends outwardly from the first part (32) and the second part (34) is moveable relative to the first part (32) in a generally vertical plane, the second part (34) including a handle (39) at the free end (38) thereof, which includes control means for controlling operation of the load transport assembly (10).
